# EUROPÄISCHE PATENTSCHRIFT

(11) **EP 0 803 468 B1**
(45) Veröffentlichungstag und Bekanntmachung des Hinweises auf die Patenterteilung: **07.01.1999**
(21) Anmeldenummer: 97106757.4
(22) Anmeldetag: 24.04.1997
(51) Int. Cl.: C01B 33/04

(54) **Verfahren zur Stabilisierung von hydridischen Silanen**
Process for the stabilisation of hydride silanes
Procédé de stabilisation de silanes hydrares

(30) Priorität: 25.04.1996 DE 19616556
(43) Veröffentlichungstag der Anmeldung: 29.10.1997
(73) Patentinhaber: Wacker-Chemie GmbH, 81737 München (DE)
(72) Erfinder: Reitmeier, Rudolf, Dr., 84489 Burghausen (DE); Rösch, Lutz, Prof. Dr., 84489 Burghausen (DE); Geisberger, Gilbert, Dr., 84503 Altötting (DE); Kippe, Dieter, 84489 Burghausen (DE)
(74) Vertreter: Fritz, Helmut, Dr.

(56) Entgegenhaltungen:
- DE-A- 4 014 645
- DE-B- 1 948 911
- GB-A- 909 950

## Beschreibung

Die Erfindung betrifft ein Verfahren zur Stabilisierung von hydridischen Silanen und oligomeren hydridischen Silanen, die bis zu 5 Siliciumatome enthalten, bei dem die hydridischen Silane und oligomeren hydridischen Silane mit Kohlenwasserstoff als Stabilisator versetzt werden.

Hydridische Silane, d. h. Silane, welche eine Si-H Bindung aufweisen, werden in der industriellen Technik nicht nur für Hydrosilylierungen zur Herstellung von Donorsilanen verwendet, sondern auch für Hydrier- bzw. Reduktionsprozesse, Gasphasenabscheidungen, wie CVD und insbesondere zur Herstellung von Reinstsilicium für Elektronik-Anwendungen. Die letztgenannte sehr bedeutende Anwendung geht von metallisch verunreinigtem (Metallurgical Grade) Silicium aus. Durch aufwendige Druckdestillationen auf der daraus hergestellten Stufe des Trichlorsilans HSiCl₃ bzw. bei besonderen Verfahren sogar des selbstentzündlichen Monosilans SiH₄, werden die im metallurgischen Rohsilicium enthaltenen Verunreinigungen abgetrennt. Das auf diese Weise gewonnene "Electronic Grade Trichlorsilan" neigt aber zu Si-H/Cl-Austauschreaktionen, was seine Handhabung erschwert. Die bereits durch geringste Spuren z. B. von HCl entstehenden hydridreichen Nebensilane führen nämlich zu einer zunehmenden Instabilität insbesondere bei Luftkontakt. Der im Sicherheitsdatenblatt angegebene Zündpunkt von HSiCl₃ nach DIN 51794 von ca. 185 °C kann bei längerer Lagerung bis zur Raumtemperatur erniedrigt sein, wenn deutliche Anteile an selbstentzündlichem Monosilan SiH₄ entstehen.

Noch wesentlich gefährlicher war bisher die Situation beim gasförmigen Dichlorsilan H₂SiCl₂, dessen Zündpunkt laut Herstellbetrieb je nach Charge zwischen ca. 70 °C und Raumtemperatur liegt. Dieses brisante Nebenprodukt der Trichlorsilan-Synthese wurde deshalb möglichst nicht isoliert, sondern bereits im Herstellbetrieb in Tetrachlorsilan eingeleitet, das gleichzeitig in größerer Menge anfällt. Um für die SiCl₄-Lösungen Zündpunkte über 200 °C sicherzustellen ist aber eine hohe Verdünnung auf < 3 % H₂SiCl₂ notwendig. In L. G. Britton, "Combustion Hazards of Silane and its Chlorides", Part II, 1989, S. 28 - 43, Union Carbide Corporation, ist für reinstes Dichlorsilan ein Zündpunkt von 44 ± 3 °C angegeben. Es ist dort aber kein Zusatz beschrieben, der zu einer deutlichen Stabilisierung der gefährlichen Hydrogensilane geeignet wäre.

DE-A-40 14 645 beschreibt den Einsatz von gesättigten Alkanen in einem Lösch- und Inertisierungsmittel zum Löschen von nicht selbstentzündlichen Chlorsilanen.

Ebenfalls niedrige Zündpunkte weisen die oligomeren hydridischen Silane auf. Wenn eine Entzündung von Hydrogensilan oder oligomere Hydrogensilane enthaltenden Mischungen, insbesondere mit Luft oder Sauerstoff erfolgt ist, pflanzt sich die Reaktion meistens explosionsartig fort.

Der vorliegenden Erfindung liegt die Aufgabe zugrunde, ein Verfahren zur Stabilisierung von hydridischen Silanen und oligomeren hydridischen Silanen bereitzustellen, das die Handhabung mit diesen Silanen erleichtert und insbesondere deren Zündpunkte erhöht.

Die Erfindung betrifft ein Verfahren zur Stabilisierung von hydridischen Silanen und oligomeren hydridischen Silanen, die bis zu 5 Siliciumatome enthalten, bei dem die hydridischen Silane und oligomeren hydridischen Silane mit aromatischem oder ungesättigt aliphatischem Kohlenwasserstoff als Stabilisator, welcher gegebenenfalls funktionelle Gruppen aufweist, die ausgewählt werden aus Carbonsäureester-, Aldehyd-, Keto-, Ether-, Thioether-, tertiären Amino-, Epoxy- und Cyanogruppen und Halogenatomen, versetzt werden.

Nachstehend wird der Ausdruck "hydridische Silane" für sowohl monomere als auch oligomere hydridische Silane verwendet.

Durch den Zusatz der Stabilisatoren wird der Zündpunkt der hydridischen Silane deutlich bis drastisch erhöht. Außerdem wird mit diesen Stabilisatoren die Brisanz von silanhaltigen Mischungen, insbesondere mit Luft oder Sauerstoff, bei einer Entzündung erniedrigt. Sie wirken gleichsam als Regler im Radikalkettenmechanismus und mildern die Wucht der Explosion, die ohne diese Stabilisatoren sehr heftig verläuft.

Aufgrund dieser effizienten mit nur geringen Materialkosten verbundenen Stabilisierung vereinfachen sich sowohl Handhabung als auch chemische Operationen mit hydridischen Silanen im großtechnischen Maßstab erheblich. Dementsprechend lassen sich nach diesem Verfahren beträchtliche Kosten bei der Verarbeitung dieser hydridischen Silane einsparen. Dies beginnt bei der Lagerung, wo der für potentiell bereits bei Raumtemperatur selbstentzündliche Silane notwendige Sicherheitsaufwand bzw. das für eine Verdünnung mit SiCl₄ und/oder Inertgas aufzuwendende größere Tankvolumen entfällt. Infolge der resultierenden wesentlich einfacheren Zünd-Temperatur-Klasse können insbesondere an chemischen Reaktoren Investitionskosten eingespart bzw. Standardreaktoren verwendet werden.

Besondere Bedeutung hat die Stabilisierung der monomeren hydridischen Silane der allgemeinen Formel (I)

R_{b}SiHₐX_{c} (I),

und der oligomeren hydridischen Silane der allgemeinen Formel (II)

H_{d}RₑX_{f}Si-[H_{g}RₕXᵢSi]ₓ-SiXⱼRₖHₗ (II),

wobei in den vorstehenden allgemeinen Formeln (I) und (II)
- **R**: gegebenenfalls mit Fluor-, Chlor-, Bromatomen oder Cyanogruppen substituierte Kohlenwasserstoffreste mit 1 bis 18 Kohlenstoffatomen,
- **X**: Fluor-, Chlor-, Bromatome oder gegebenenfalls mit Fluor-, Chlor-, Bromatomen oder Cyanogruppen substituierte Alkoxyreste mit 1 bis 18 Kohlenstoffatomen,
- **a**: die Werte 1, 2, 3 oder 4,
- **b, c, d, e, f, j, k und l**: jeweils die Werte 0, 1, 2 oder 3,
- **g, h und i**: jeweils die Werte 0, 1 oder 2 und
- **x**: die Werte 0, 1, 2 oder 3 bedeuten,
mit der Maßgabe, daß in der allgemeinen Formel (II) die Summe aus d + g + l mindestens 1 ist.

In den vorstehenden allgemeinen Formeln (I) und (II) sind alle Siliciumatome 4-wertig.

Wenn die hydridischen Silane Halogenatome aufweisen ist als Halogenatom das Chloratom bevorzugt. In den allgemeinen Formeln (I) und (II) sind als **X** neben Chloratomen gegebenenfalls mit Fluor-, Chlor-, Bromatomen oder Cyanogruppen substituierte Alkoxyreste mit 1 bis 6 Kohlenstoffatomen bevorzugt, wie der Methoxy-, Ethoxy-, n-Propoxy-, Isopropoxy-, n- Butoxy-, iso-Butoxy-, sec.-Butoxy-, tert.-Butoxyrest, Pentyloxyreste, wie der n-Pentyloxyrest und Hexyloxyreste, wie der n-Hexyloxyrest. Die Methoxy- und Ethoxyreste sind besonders bevorzugt. Bevorzugt sind die nicht substituierten Alkoxyreste.

Beispiele für die Kohlenwasserstoffreste an den hydridischen Silanen, insbesondere für **R** in den allgemeinen Formeln (I) und (II) sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl-und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Kohlenwasserstoffreste **R** sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2'_{,}2',2'-Hexafluorisopropylrest, der Heptafluorisopropylrest, und Halogenarylreste, wie der o-, m- und p-Chlorphenylrest.

Besonders bevorzugt sind die vorstehenden nicht substituierten Kohlenwasserstoffreste mit 1 bis 6 Kohlenstoffatomen, insbesondere die Alkylreste und der Phenylrest.
in den allgemeinen Formeln (I) und (II) bedeuten vorzugsweise
- **a**: die Werte 2, 3 oder 4,
- **x**: die Werte 0, 1 oder 2 und
die Summe aus d + g + l mindestens 1, 2, oder 3.

Besonders wichtige stabilisierbare hydridische Silane sind Dichlorsilan, Trichlorsilan, Methylsilan CH₃SiH₃ und Monosilan SiH₄, sowie die Disilane H₃Si-SiH₃ und HSiCl₂-SiCl₃.

Als Stabilisatoren können ungesättigte Kohlenwasserstoffe eingesetzt werden. Vorzugsweise weisen die Kohlenwasserstoffe neben gegebenenfalls vorstehenden funktionellen Gruppen 2 bis 12, Kohlenstoffatome auf.

Beispiele für Aromaten und alkylierte Aromaten sind Benzol, Toluol, Xylole oder Heteroaromaten, insbesondere halogensubstituierte wie Chlorbenzol. Sie sind bevorzugt, weil sie eine Hydrosilyierung der hydridischen Silane mit Platinkatalystoren nicht behindern.

Besonders wirksam sind durch Doppel- oder Dreifachbindungen ungesättigte aliphatische Kohlenwasserstoffe mit isolierten Doppel oder Dreifachbindungen, wie Ethen, Propen, Allylchlorid, Isobuten, n-Buten oder längerkettige Olefine, Propin oder Phenylacetylen. Besonders bevorzugt sind interne oder cyclische Olefine wie 2-Methyl-2-buten, 2-Buten, Crotonsäureester, Cyclopenten, Cyclohexen, Cycloocten oder Cyclooctadien.

Die Stabilisatoren werden vorzugsweise in Mengen von 1000 bis 0,01 Gewichtsteilen, insbesondere 500 bis 0,1 Gewichtsteilen, pro 100 Gewichtsteile an hydridischen Silanen eingesetzt.

Interne Olefine wie 2-Methyl-2-buten führen bereits bei sehr kleinen Stabilisatormengen, wie unter 1 Gewichtsteil pro 100 Gewichtsteile an hydridischen Silanen zu einer hohen Stabilisierung, die auch in Gegenwart von Hydrosilylierungskatalysatoren nicht durch Addition an die Doppelbindung abnimmt. Die ebenfalls sehr wirksamen Stabilisatoren Cyclopenten, Cyclohexen oder Isobuten sind bei Hydrosilylierungs-Prozessen besonders bevorzugt, wo sie gleichzeitig als Reaktionspartner des jeweiligen hydridischen Silans dienen. Um eine zuverlässige Stabilisierung über alle Phasen des Additions-Prozesses sicherzustellen, wird hier mindestens die molare Menge an Olefin bevorzugt, die der jeweiligen Molzahl an hydridischen Silanen entspricht.

Die in geringer Menge einzusetzenden Stabilisatoren können so ausgewählt werden, daß sie zwar effizient stabilisieren, aber die geplante chemische Umsetzung nicht behindern. Bei Hydrosilylierungen dürfen sie den Edelmetallkatalysator nicht auf Dauer inhibieren bzw. nicht wesentlich zu H₂-Abspaltungen mit dem Hydridosilan beitragen.

Die Stabilisatoren können bereits vor oder bei der Bildung der zu stabilisierenden hydridischen Silane zugesetzt werden. Die Stabilisatoren können beispielsweise hydridischen Silanen zugesetzt werden, welche durch Ligandenaustausch dismutieren und dadurch hydridreichere Silane oder gar SiH₄ bilden können. Das Verfahren zur Stabilisierung eignet sich deshalb auch sehr gut zum sicheren Transport und auch für längere Lagerungen derartiger hydridischer Silane.

Beim Einsatz der hydridischen Silane in Hydrosilylierungen wird der Stabilisator bevorzugt direkt in dem Behälter, wie Vorratstank oder Druckgefäß vorgelegt, welcher die hydridischen Silane aufnehmen soll. Dadurch werden Sicherheitsprobleme von vornherein vermieden, auch wenn Katalysatoren, die den ansonsten gefährlichen H/X-Ligandenaustausch am Silicum durch Dismutation oder Disproportionierung herbeiführen können, zugegen sind.

Die Stabilisatoren können auch außerhalb des Behälters, in dem sich die hydridischen Silane befinden, für den Fall, daß die hydridischen Silane stabilisiert werden sollen, bereit gehalten werden.

Die Zugabe der Stabilisatoren kann dann erst im Bedarfsfall erfolgen, z. B. wenn die Innentemperatur sich dem Zündpunkt annähert bzw. der Zündpunkt durch H/Cl-Austausch sinkt und/oder Luftkontakt zu erwarten ist, bei Leckagen von hydridischen Silanen oder wenn ein Lagertank oder eine Rohrleitung geöffnet bzw. entleert werden muß. Dadurch können CVD-Verfahren oder auch andere Abscheideprozesse mit reinen hydridischen Silanen durchgeführt werden, ohne daß Stabilisatoren direkt ins abzuscheidende hydridische Silan eingebracht werden. Vorzugsweise ist der Siedepunkt der bereitgehaltenen Stabilisatoren höchstens 30°, insbesondere höchstens 10° vom Siedepunkt der hydridischen Silane entfernt.

Es ist bereits ausreichend den jeweiligen Stabilisator einfach in den Behälter zu geben bzw. zu pumpen, der das hydridische Silan oder eine hydridische Silane enthaltende Mischung enthält. Da Kohlenwasserstoffe, insbesondere ungesättigte, sich hinreichend mit den zu stabilisierenden Silanen mischen, ist eine zusätzliche Durchmischung z. B. durch Rühren nicht notwendig.

Bei gasförmigen hydridischen Silanen, wie SiH₄ reicht bereits der Dampfdruck von zugegebenen flüssigen Olefinen aus, zu einer deutlichen Stabilisierung des ansonsten schon bei niedrigen Temperaturen selbstentzündlichen Gases. Ein zusätzliches Lösungsmittel ist nicht notwendig, kann aber jederzeit anwesend sein.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20° C ;
d) die Zündpunkte der Mischungen bei Luftkontakt nach DIN 51794, entsprechend EG-Methode A.12 (Richtlinie 84/449/EG) gemessen.

### Beispiele

### a) Stabilisierung von Dichlorsilan

### Beispiel 1: nicht erfindungsgemäßes Vergleichsbeispiel Dichlorsilan-Verdünnung mit SiCl₄

In einem zylindrischen 0,9 l parr-Druckgefäß mit aufgesetztem Manometer und als Gasablaß angebrachtem Nadelventil im Gasraum wird Tetrachlorsilan bei Raumtemperatur vorgelegt. Über eine zweite durch ein weiteres Nadelventil absperrbare Dosierstelle mit Tauchrohr wird in den unteren Teil des Druckgefäßes nun 99 %iges Dichlorsilan aus einer Druckkanne aus Edelstahl, in der ein Überdruck von ca. 0,15 MPa herrscht, im Folgenden Vorratskanne genannt, eingeleitet.

Es ergibt sich eine 25 %ige Lösung von H₂SiCl₂ in Tetrachlorsilan. Eine über das Tauchrohr entnommene Probe ergibt einen Zündpunkt von anfangs 90 °C. Die Zündung erfolgt mit hoher Brisanz. Nach 1 Woche Lagerung fällt der Zündpunkt auf 80 bis 70 °C. Nach weiteren 1 - 3 Wochen ist bereits soviel Monosilan im Parr-Gefäß, daß sich am Gasablaß ausströmendes Silangemisch sofort spontan, d. h. ohne zusätzliche Energiezufuhr, unter Ausbildung einer Stichflamme entzündet.

Die weitere Verdünnung der zunächst hergestellten 25 %igen H₂SiCl₂-Lösung mit SiCl₄ liefert Zündpunkte von nur ca. 115 °C bei 10 Gew.-% und schließlich ca. 195 °C bei 3 Gew-% H₂SiCl₂ in Tetrachlorsilan. Diese hohe Verdünnung ist für technische Synthesen wenig interessant.

### Beispiel 2:

### Stabilisatoren zur H₂SiCl₂/SiCl₄-Lösung

Werden nur 1 Gewichtsteil 2-Methyl-2-buten zu 99 Teilen der im vorstehenden Vergleichsbeispiel beschriebenen 25 %igen Lösung von H₂SiCl₂ in Tetrachlorsilan gegeben, erhöht sich der Zündpunkt der so stabilisierten Mischung auf 240 °C.

In der nachfolgenden Tabelle sind einige Stabilisatoren aufgeführt, die analog zu einer Stabilisierung der resultierenden Dichlorsilan-Lösungen führen.

| Gewichtsteile | | | |
|---|---|---|---|
| H₂SiCl₂ | SiCl₄ | Gewichtsteile (T) an Stabilisator | Zündpunkt |
| 25 | 75 | --- * | 80 °C nach 1 Woche |
| 25 | 75 | 1 T 2-Methylbuten | 240 °C |
| 25 | 75 | 5 T 2- Methylbuten | 330 °C |
| 20 | 58 | 2 T Toluol | 280 °C |
| 24 | 71 | 5 T Petroleum¹ * | 190 °C |
| 23 | 71 | 6 T Cyclohexan * | 200 °C |
| 24 | 71 | 4 T MTBE² * | 210 °C |
| 23 | 68 | 8 T 2-Cl-Me-Propan³* | 220 °C |
| 25 | 75 | 1 T Cycloocten | 230 °C |

| | | | |
|---|---|---|---|
| ¹Petroleum = Petroletherfraktion (KP 60 - 70 °C) | | | |
| ²MTBE = tert. Butylmethylether | | | |
| ³2-Chlor-2-Methylpropan = tert.-Butylchlorid | | | |
| *nicht erfindungsgemäß | | | |

Nachmessungen zeigen, daß die gemessenen hohen Werte über mehrere Wochen bis Monate stabil bleiben.

### Beispiel 3:

### Zugabe von Olefinen zu technischem Dichlorsilan

In einem 0,9 l-Parr-Druckgefäß, das in Beispiel 1 beschrieben ist, werden 2 g Cyclopenten vorgelegt und unter Ausschluß von Sauerstoff und Feuchtigkeit durch Argon-Spülung insgesamt 305 g technisches H₂SiCl₂ (99 %ig) aus der 10 l-Vorratskanne eingeleitet.

Der Zündpunkt der über das Ablaßventil auf der Abdeckplatte des zylindrischen Druckgefäßes zu entnehmenden Gasmischung beträgt > 160 °C. Bei der Nachmessung nach 1 Monat Lagerung im Parr-Gefäß wird wiederum 160 °C als Zündpunkt bestimmt, obwohl bereits merklich Cl/H-Austausch durch Disproportionierung stattgefunden hat. Neben H₂SiCl₂ sind im Gaschromatogramm einige % H₃SiCl bzw. HSiCl₃ als Hauptbestandteile zu sehen.

Eine parallel dazu ohne Stabilisator in einem ähnlichen Druckgefäß gelagerte Dichlorsilan-Füllung ist infolge von Cl/H-Austauschreaktion bereits bei der gasförmigen Entnahme über das Nadelventil, d. h. bei Raumtemperatur, selbstentzündlich und führte zu einer Stichflamme. Durch Dosierung von 2 Gew.-% 2-Methyl-2-buten wird nun der Zündpunkt wieder auf sichere Werte > 200 °C angehoben.

### Beispiel 4:

### Cyclopenten/H₂SiCl₂-Mischung, Hydrosilylierung

In einem 1 l-Rührautoklaven mit Ablaßhahn legt man zunächst 245 g Cyclopenten vor und pumpt dann über ein in die organische Phase reichendes Tauchrohr 304 g H₂SiCl₂ hinzu. Von der resultierenden ca. 54 %igen Dichlorsilan/Cyclopenten-Lösung werden ca. 50 g unter inerten Bedingungen (getrocknetes, evakuierte Aufnahmegefäß, verschraubte Edelstahlkapillare, Argon-Spülung) über den Ablaßhahn abgefüllt für die Zündpunktbestimmung. Es ergeben sich Werte > 230 °C.

Durch Zugabe einer von der Hexachlorplatinsäure abgeleiteten Katalysatorlösung und Erwärmung wird die Monoaddition von Cyclopenten eingeleitet. Nach ca. 10 min Reaktion wird schnell abgekühlt und eine 2. Probe zur Zündpunktsbestimmung abgefüllt. Die Meßung ergibt nun 240 °C.

Nachdem die Reaktionsmischung im Autoklaven erneut erwärmt und schließlich weitgehend zur gewünschten Monostufe Cyclopentyldichlorsilan umgesetzt ist, liefert eine 3. Zündpunktsbestimmung Werte von 240 bis 250 °C.

### Beispiel 5:

### Isobuten/Dichlorsilan

Analog Beispiel 4 werden zunächst 350 g Isobuten im 1 l-Autoklaven vorgelegt. Nach Zugabe von 270 g Dichlorsilan und Rühren kann infolge des sich einstellenden Innendrucks des Autoklaven wiederum flüssiges Dichlorsilan-Isobutylen-Gemisch über das Bodenventil in ein kleineres, evakuiertes Druckgefäß abgefüllt werden. Der Zündpunkt dieser verflüssigten Gasmischung beträgt 250 °C.

Der im Autoklaven verbliebene Hauptteil der Isobutylen/Dichlorsilan-Mischung wird durch Zugabe eines homogenen Platin-Katalysators in hoher Selektivität zum gewünschten Diisobutyldichlorsilan mit dem Zündpunkt 280 °C, umgesetzt.

### b) Stabilisierung von anderen hydridischen Silanen:

### Beispiel 6:

### Stabilisierung von Monosilan SiH₄

Analog der Vorgehensweise wie in Beispiel 1 werden zuerst 223 g 2-Methyl-2-buten ins getrocknete und evakuierte 0,9 l-Parr Druckgefäß eingelegt. Über das Tauchrohr werden nun 25 g SiH₄ eingepreßt, das entspricht 10,1 % SiH₄. Es werden 0,9 MPa Überdruck gemessen. Die Zündpunktbestimmung der über das Tauchrohr entnommenen Flüssigkeit ergibt einen Wert von 350 °C. Die aus dem Gasraum entnommene Probe hat einen Zündpunkt von > 190 °C.

Bei einer Vorlage von 200 g Cyclopenten (Cp) und 8,4 g eingeleitetem SiH₄ (das entspricht 4,2 % SiH₄; es werden 0,4 MPa Überdruck gemessen) findet man Zündpunkte für die flüssige Cp-Phase von 300 °C, sowie wiederum 190 °C für den Gasraum.

Der Zündvorgang ist hier wesentlich moderater im Vergleich zum reinen SiH₄, das wie das reine H₂SiCl₂ bzw. die SiCl₄-Lösung sehr heftig zündet. Die insbesondere in der Gasphase entsprechend den stark unterschiedlichen Dampfdrücken relativ niedrige Konzentration an ungesättigtem Stabilisator reicht aus, den Oxidationsvorgang so zu moderieren, daß gefährliche Situationen vermieden werden. Das über den oberen Ablaß ausströmende SiH₄-Gas zeigte keine heftige Reaktion. Wenn es über eine offene Flamme geleitet wird, verbrennt es sehr moderat. Es bilden sich dabei sehr leichte lange Fäden, die verkleben, wenn sie aufgewickelt werden.

Die nach dem Abblasen des Überdrucks verbliebene Flüssigkeit zeigt auch an Luft keine auffälligen Unterschiede zu den in den vorgenannten Beispielen erhaltenen Lösungen.

### Beispiel 7:

### Stabilisierung von Organohydridosilanen

Wie in Beispiel 7 werden zuerst 226 g 2-Methyl-2-buten im 0,9 l-Druckgefäß vorgelegt und dann 23,4 g gasförmiges Methylsilan CH₃SiH₃ eingeleitet. Das entspricht 9,4 % CH₃SiH₃. Es werden 0,2 MPa Überdruck gemessen. Der Zündpunkt der über das Tauchrohr entnommenen Probe beträgt > 230 °C. Dies bedeutet eine deutliche Stabilisierung gegenüber dem reinen CH₃SiH₃, dessen Zündpunkt bei 160 °C liegt.

Durch Zugabe von 5 Gew.-% 2-Methyl-2-buten werden auch in situ entstehende hydridische Silane stabilisiert, z. B. bei der H-Übertragung von CH₃SiH₃ auf Organylsilane RSiCl₃ oder R₂SiCl₂ entstehende hydridische Silane. Obwohl hier bzw. bei der Destillation über Gaschromatogramm oder NMR nachweisbare brisante Polyhydridosilan-Nebenprodukte (z. B. bei der Hydrierung von Phenyltrichlorsilan neben PhSiHCl₂ auch PhSiH₃ und SiH₄) auftreten, bleibt der Zündpunkt der Reaktionsmischung mit 5 % olefinischem Stabilisator stets oberhalb von 230 °C.

### Beispiel 8:

### Hydridische Silane mit Si-Si-Bindungen

Der nach der destillativen Abtrennung von HSiCl₃ und SiCl₄ verbleibende Rückstand des Rohsilangemisches aus der technischen Trichlorsilan-Synthese enthält neben Hexachlordisilan und Hexachlordisiloxan noch einige hydridische Chlordisilane sowie auch längerkettige Silane, die diesen Rückstand insbesondere bei Luft- oder Sauerstoff-Einwirkung sehr brisant machen.

Die Zündtemperatur eines typischen Rückstands aus der Trichlorsilan-Synthese mit insgesamt 0,2 Gew.-% H-Gehalt (nach ²⁹Si-NMR ca. 12 % HSi₂Cl₅, 9 % H₂Si₂Cl₄ sowie höhermolekulare H-haltige Chlorsilane) beträgt ohne Stabilisator 60 °C. Dabei tritt eine heftige Oxidation ein.

Durch einfache Zugabe von 8 Gew. % 2-Methylbuten zu einer Probe dieses Rückstands wird der Zündpunkt der Mischung auf über 200 °C angehoben. Die analoge Zugabe von 10 Gew.-% Chlorbenzol zu dem Rückstand brachte einen Zündpunkt von > 150 °C. Die mit diesen organischen Additiven stabilisierten Rückstands-Mischungen verbrannten dabei recht moderat.

Durch Zugabe von ungesättigten organischen Stabilisatoren sind also auch hydridische Disilane und Polysilane sicher zu lagern sowie zu entsorgen bzw. zu verbrennen.

## Patentansprüche

1. Verfahren zur Stabilisierung von hydridischen Silanen und oligomeren hydridischen Silanen, die bis zu 5 Siliciumatome enthalten, bei dem die hydridischen Silane und oligomeren hydridischen Silane mit aromatischem oder ungesättigt aliphatischem Kohlenwasserstoff als Stabilisator, welcher gegebenenfalls funktionelle Gruppen aufweist, die ausgewählt werden aus Carbonsäureester-, Aldehyd-, Keto-, Ether-, Thioether-, tertiären Amino-, Epoxy- und Cyanogruppen und Halogenatomen, versetzt werden.

2. Verfahren nach Anspruch 1, bei dem die monomeren hydridischen Silane die allgemeine Formel (I)
R_{b}SiHₐX_{c} (I),
aufweisen und die oligomeren hydridischen Silane die allgemeine Formel (II)
H_{d}RₑX_{f}Si-[H_{g}RₕXᵢSi]ₓ-SiXⱼRₖHₗ (II),
aufweisen, wobei in den vorstehenden allgemeinen Formeln (I) und (II)
**R** gegebenenfalls mit Fluor-, Chlor-, Bromatomen oder Cyanogruppen substituierte Kohlenwasserstoffreste mit 1 bis 18 Kohlenstoffatomen,
**X** Fluor-, Chlor-, Bromatome oder gegebenenfalls mit Fluor-, Chlor-, Bromatomen oder Cyanogruppen substituierte Alkoxyreste mit 1 bis 18 Kohlenstoffatomen,
**a** die Werte 1, 2, 3 oder 4,
**b, c, d, e, f, j, k** und **l** jeweils die Werte 0, 1, 2 oder 3,
**g, h und i** jeweils die Werte 0, 1 oder 2 und
**x** die Werte 0, 1, 2 oder 3 bedeuten,
mit der Maßgabe, daß in der allgemeinen Formel (II) die Summe aus d + g + l mindestens 1 ist.

3. Verfahren nach Anspruch 2, bei dem **R** nicht substituierte Kohlenwasserstoffreste mit 1 bis 6 Kohlenstoffatomen bedeutet.

4. Verfahren nach Anspruch 2, bei dem **X** ein Chloratom oder Alkoxyreste mit 1 bis 6 Kohlenstoffatomen bedeutet.

5. Verfahren nach einem der Ansprüche 1 bis 4, bei dem als Stabilisator Kohlenwasserstoffe eingesetzt werden, die neben den gegebenenfalls in Anspruch 1 genannten funktionellen Gruppen 2 bis 12 Kohlenstoffatome aufweisen.

6. Verfahren nach einem der Ansprüche 1 bis 5, bei dem die Stabilisatoren in Mengen von 1000 bis 0,01 Gewichtsteilen pro 100 Gewichtsteile an hydridischen Silanen und oligomeren hydridischen Silanen eingesetzt werden.

7. Verfahren nach einem der Ansprüche 1 bis 6, bei dem die Stabilisatoren außerhalb des Behälters, in dem sich die hydridischen Silane und oligomeren hydridischen Silane befinden, für den Fall, daß die hydridischen Silane und oligomeren hydridischen Silane stabilisiert werden sollen, bereitgehalten werden.

8. Verfahren nach Anspruch 7, bei dem der Siedepunkt der bereitgehaltenen Stabilisatoren höchstens 30° vom Siedepunkt der hydridischen Silane und oligomeren hydridischen Silane entfernt ist.

## Claims

1. Process for stabilizing hydridic silanes and oligomeric hydridic silanes containing up to 5 silicon atoms, wherein the hydridic silanes and oligomeric hydridic silanes are admixed with an aromatic or unsaturated aliphatic hydrocarbon as stabilizer, which hydrocarbon may have functional groups selected from among carboxylic ester, aldehyde, keto, ether, thioether, tertiary amino, epoxy and cyano groups and halogen atoms.

2. Process according to Claim 1, wherein the monomeric hydridic silanes have the general formula (I)
R_{b}SiHₐX_{c} (I)
and the oligomeric hydridic silanes have the general formula (II)
H_{d}RₑX_{f}Si-[H_{g}RₕXᵢSi]ₓ-SiXⱼRₖHₗ (II),
where, in the above general formulae (I) and (II),
R are hydrocarbon radicals having from 1 to 18 carbon atoms which may be unsubstituted or substituted by fluorine, chlorine or bromine atoms or cyano groups,
X are fluorine, chlorine or bromine atoms or alkoxy radicals having from 1 to 18 carbon atoms which may be unsubstituted or substituted by fluorine, chlorine or bromine atoms or cyano groups,
a is 1, 2, 3 or 4,
b, c, d, e, f, j, k and l are each 0, 1, 2 or 3,
g, h and i are each 0, 1 or 2 and
x is 0, 1, 2 or 3,
with the proviso that, in the general formula (II), the sum of d + g + l is at least 1.

3. Process according to Claim 2, wherein R are unsubstituted hydrocarbon radicals having from 1 to 6 carbon atoms.

4. Process according to Claim 2, wherein X are chlorine atoms or alkoxy radicals having from 1 to 6 carbon atoms.

5. Process according to any of Claims 1 to 4, wherein the stabilizers used are hydrocarbons which, in addition to any functional groups mentioned in Claim 1, have from 2 to 12 carbon atoms.

6. Process according to any of Claims 1 to 5, wherein the stabilizers are used in amounts of from 1000 to 0.01 parts by weight per 100 parts by weight of hydridic silanes and oligomeric hydridic silanes.

7. Process according to any of Claims 1 to 6, wherein the stabilizers are held ready outside the container in which the hydridic silanes and oligomeric hydridic silanes are located in case the hydridic silanes and oligomeric hydridic silanes are to be stabilized.

8. Process according to Claim 7, wherein the boiling point of the stabilizers being held ready is at most 30° away from the boiling point of the hydridic silanes and oligomeric hydridic silanes.

## Revendications

1. Procédé de stabilisation de silanes hydrurés et de silanes hydrurés oligomères, qui renferment jusqu'à 5 atomes de silicium, dans lequel les silanes hydrurés et les silanes hydrurés oligomères sont mélangés avec un hydrocarbure aromatique ou aliphatique insaturé en tant que stabilisant, lequel hydrocarbure renferme éventuellement des groupes fonctionnels, qui sont choisis parmi les groupes ester carboxylique, aldéhyde, céto, éther, thioéther, amino tertiaire, époxy et cyano et des atomes d'halogène.

2. Procédé selon la revendication 1, dans lequel les silanes hydrurés monomères sont de formule générale (I)
R_{b}SiHₐX_{c} (I),
et les silanes hydrurés oligomères sont de formule générale (II)
H_{d}RₑX_{f}Si-[H_{g}RₕXᵢSi]ₓ-SiXⱼRₖHₗ (II),
où, dans les formules générales (I) et (II) ci-dessus
R représente des radicaux hydrocarbonés, ayant de 1 à 18 atomes de carbone, éventuellement substitués par des atomes de fluor, de chlore, de brome ou des groupes cyano,
X représente des atomes de fluor, de chlore, de brome ou des radicaux alcoxy, ayant de 1 à 18 atomes de carbone, éventuellement substitués par des atomes de fluor, de chlore, de brome ou des groupes cyano,
a vaut 1, 2, 3 ou 4,
b, c, d, e, f, j, k et l valent chacun 0, 1, 2 ou 3,
g, h et i valent chacun 0, 1 ou 2 et
x vaut 0, 1, 2 ou 3,
à condition que dans la formule générale (II), la somme de d + g + l vaille au moins 1.

3. Procédé selon la revendication 2, dans lequel R représente des radicaux hydrocarbonés non substitués ayant de 1 à 6 atomes de carbone.

4. Procédé selon la revendication 2, dans lequel X représente un atome de chlore ou des radicaux alcoxy ayant de 1 à 6 atomes de carbone.

5. Procédé selon l'une quelconque des revendications 1 à 4, dans lequel on utilise, en tant que stabilisants, des hydrocarbures qui renferment, en plus des groupes fonctionnels éventuels mentionnés à la revendication 1, de 2 à 12 atomes de carbone.

6. Procédé selon l'une quelconque des revendications 1 à 5, dans lequel les stabilisants sont utilisés en quantités allant de 1 000 à 0,01 parties en poids pour 100 parties en poids de silanes hydrurés et de silanes hydrurés oligomères.

7. Procédé selon l'une quelconque des revendications 1 à 6, dans lequel les stabilisants sont tenus prêts à l'extérieur du récipient dans lequel se trouvent les silanes hydrurés et les silanes hydrurés oligomères, au cas où les silanes hydrurés et les silanes hydrurés oligomères doivent être stabilisés.

8. Procédé selon la revendication 7, dans lequel le point d'ébullition des stabilisants tenus prêts diffère au plus de 30° du point d'ébullition des silanes hydrurés et des silanes hydrurés oligomères.
